(19) Europäisches Patentamt / European Patent Office / Office européen des brevets

(11) **EP 3 842 473 A1**

(12) **EUROPEAN PATENT APPLICATION**
published in accordance with Art. 153(4) EPC

(43) Date of publication:
**30.06.2021 Bulletin 2021/26**

(21) Application number: **19852709.5**

(22) Date of filing: **13.08.2019**

(51) Int Cl.:
**C08G 69/28** (2006.01)

(86) International application number:
**PCT/JP2019/031887**

(87) International publication number:
**WO 2020/040009 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **21.08.2018 JP 2018154372**

(71) Applicant: **MITSUBISHI GAS CHEMICAL COMPANY, INC.**
**Chiyoda-ku**
**Tokyo 100-8324 (JP)**

(72) Inventors:
- **YAMASHITA, Momoko**
  **Hiratsuka-shi, Kanagawa 254-0016 (JP)**
- **OGURO, Hatsuki**
  **Hiratsuka-shi, Kanagawa 254-0016 (JP)**
- **ODA, Takafumi**
  **Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

(54) **AMORPHOUS POLYAMIDE RESIN PRODUCTION METHOD**

(57)    Provided is a method for producing an amorphous polyamide resin whereby the production of foreign matter in the resin can be suppressed or avoided when producing an amorphous polyamide resin having a constituent unit derived from isophoronediamine, a constituent unit derived from an $\alpha,\omega$-linear aliphatic dicarboxylic acid having from 8 to 14 carbons, and a constituent unit derived from an aromatic dicarboxylic acid. The method for producing an amorphous polyamide resin including subjecting a diamine component and a dicarboxylic acid component to melt polycondensation reaction, the diamine component including 70 mol% or more of isophoronediamine, and the dicarboxylic acid component including an $\alpha,\omega$-linear aliphatic dicarboxylic acid having from 8 to 14 carbons and an aromatic dicarboxylic acid, wherein a maximum attainable temperature reached in the melt polycondensation reaction is higher than a melting point of the phosphorus atom-containing compound, and lower than a thermal decomposition temperature of the phosphorus-atom containing compound.

EP 3 842 473 A1

**Description**

Technical Field

The present invention relates to a method for producing an amorphous polyamide resin.

Background Art

Polyamide resins obtained by polycondensation reaction of a diamine and a dicarboxylic acid have been researched for many years, and resins with various chemical structures have been used in various fields. Typical examples include polyamide 6, polyamide 66, polyamide 610, polyamide 11, polyamide 12, and polyamide MXD6, named by the type of raw material monomers that are used.

Meanwhile, in recent years, amorphous polyamide resins have been synthesized, and research of such resins has been advancing. Amorphous polyamide resins exhibit a high level of transparency, and through the use of this characteristic, such amorphous resins are beginning to be used in a wide range of applications from daily necessities such as various packaging containers, switch covers, and frames for lenses and eyeglasses, to industrial products and applications requiring design properties.

Patent Document 1 discloses, as such an amorphous polyamide resin, an amorphous polyamide resin that contains a constituent unit derived from a diamine and a constituent unit derived from a dicarboxylic acid, and is substantially free of constituent units derived from terephthalic acid, wherein at least 70 mol% of the constituent unit derived from a diamine is derived from 1,3-bis(aminomethyl)cyclohexane, and of the constituent unit derived from a dicarboxylic acid, from 10 to 90 mol% is derived from isophthalic acid and from 90 to 10 mol% is derived from a linear aliphatic dicarboxylic acid having from 8 to 12 carbons.

Citation List

Patent Documents

Patent Document 1: WO 2016/208272

Summary of Invention

Technical Problem

Here, the applicant of the present invention is developing, as amorphous polyamide resins, resins having a constituent unit derived from isophoronediamine, a constituent unit derived from an $\alpha,\omega$-linear aliphatic dicarboxylic acid having from 8 to 14 carbons, and a constituent unit derived from an aromatic dicarboxylic acid.

Furthermore, through further examinations conducted by the present inventors, it was discovered that in the amorphous polyamide resins developed by the applicant, minute foreign matter may be produced in the resins. The foreign matter is not of a level that is particularly problematic in ordinary products, but depending on the application such as films, thin-walled molded articles, and products requiring exceptionally high exterior appearance characteristics, improvements over foreign matter are desirable.

Thus, an object of the present invention is to solve such problems by providing a method for producing an amorphous polyamide resin that can suppress or prevent the generation of foreign matter in resin when producing an amorphous polyamide resin having a constituent unit derived from isophoronediamine, a constituent unit derived from an $\alpha,\omega$-linear aliphatic dicarboxylic acid having from 8 to 14 carbons, and a constituent unit derived from an aromatic dicarboxylic acid.

Solution to Problem

The present inventors conducted examinations on the basis of the above problems, and as a result, discovered that when synthesizing a specific amorphous polyamide resin, the above object can be achieved by stipulating a relationship between a melting point (Tm) of a phosphorus atom-containing compound used as a catalyst, and a maximum attainable temperature (Tp) reached in melt polycondensation reaction when synthesizing the amorphous polyamide resin. Specifically, the problems described above are solved by the following means <1>, and preferably by the following means <2> to <11>.

<1> A method for producing an amorphous polyamide resin including subjecting a diamine component and a dicarboxylic acid component to melt polycondensation reaction in presence of a phosphorus atom-containing compound, the diamine component including 70 mol% or more of isophoronediamine, and the dicarboxylic acid component including an $\alpha,\omega$-linear aliphatic dicarboxylic acid having from 8 to 14 carbons and an aromatic dicarboxylic acid, wherein a maximum attainable temperature reached in the melt polycondensation reaction is higher than a melting point of the phosphorus atom-containing compound, and lower than a thermal decomposition temperature of the phosphorus-atom containing compound.

<2> The method for producing an amorphous polyamide resin according to <1>, wherein the phosphorus atom-containing compound is at least one selected from an alkali metal salt of hypophosphorous acid, an alkaline earth metal salt of hypophosphorous acid, an alkali metal salt of phosphorous acid, an alkaline earth metal salt of phosphorous acid, an alkali metal salt of phosphoric acid, an alkaline earth metal salt of phosphoric acid, an alkali metal salt of pyrophosphoric acid, an alkaline earth metal salt of pyrophosphoric acid, an alkali metal salt of metaphosphoric acid, and an alkaline earth metal salt of metaphosphoric acid.

<3> The method for producing an amorphous polyamide resin according to <1>, wherein the phosphorus atom-containing compound is at least one of an alkali metal salt of hypophosphorous acid or phosphorous acid; and an alkaline earth metal salt of hypophosphorous acid or phosphorous acid.

<4> The method for producing an amorphous polyamide resin according to any one of <1> to <3>, further including performing the melt polycondensation reaction in presence of a polymerization rate modifier.

<5> The method for producing an amorphous polyamide resin according to <4>, wherein the polymerization rate modifier is at least one selected from the group consisting of alkali metal hydroxides, alkaline earth metal hydroxides, alkali metal acetates, and alkaline earth metal acetates.

<6> The method for producing an amorphous polyamide resin according to any one of <1> to <5>, wherein the thermal decomposition temperature of the phosphorus atom-containing compound is higher than 260°C.

<7> The method for producing an amorphous polyamide resin according to any one of <1> to <6>, wherein the melting point of the phosphorus atom-containing compound is from 30°C to 260°C.

<8> The method for producing an amorphous polyamide resin according to any one of <1> to <7>, wherein the amorphous polyamide resin includes a constituent unit derived from a diamine and a constituent unit derived from a dicarboxylic acid, and of the constituent unit derived from a dicarboxylic acid, from 30 to 80 mol% is a constituent unit derived from an $\alpha,\omega$-linear aliphatic dicarboxylic acid having from 8 to 14 carbons, and from 70 to 20 mol% is a constituent unit derived from an aromatic dicarboxylic acid.

<9> The method for producing an amorphous polyamide resin according to <8>, wherein in the amorphous polyamide resin, the constituent unit derived from an $\alpha,\omega$-linear aliphatic dicarboxylic acid having from 8 to 14 carbons includes at least one of a constituent unit derived from sebacic acid and a constituent unit derived from dodecanedioic acid.

<10> The method for producing an amorphous polyamide resin according to <8> or <9>, wherein in the amorphous polyamide resin, the constituent unit derived from an aromatic dicarboxylic acid includes at least one of a constituent unit derived from 2,6-naphthalene dicarboxylic acid and a constituent unit derived from isophthalic acid.

<11> The method for producing an amorphous polyamide resin according to any one of <1> to <7>, wherein the amorphous polyamide resin is constituted from a constituent unit derived from a diamine and a constituent unit derived from a dicarboxylic acid; at least 90 mol% of the constituent unit derived from a diamine is a constituent unit derived from isophoronediamine; of the constituent unit derived from a dicarboxylic acid, from 30 to 80 mol% is a constituent unit derived from an $\alpha,\omega$-linear aliphatic dicarboxylic acid having from 8 to 14 carbons, and from 70 to 20 mol% is a constituent unit derived from an aromatic dicarboxylic acid; the constituent unit derived from an $\alpha,\omega$-linear aliphatic dicarboxylic acid having from 8 to 14 carbons include at least one of a constituent unit derived from sebacic acid and a constituent unit derived from dodecanedioic acid; and the constituent unit derived from an aromatic dicarboxylic acid includes at least one of a constituent unit derived from 2,6-naphthalene dicarboxylic acid and a constituent unit derived from isophthalic acid.

Advantageous Effects of Invention

According to the present invention, when producing an amorphous polyamide resin having a constituent unit derived from isophoronediamine, a constituent unit derived from an $\alpha,\omega$-linear aliphatic dicarboxylic acid having from 8 to 14 carbons, and a constituent unit derived from an aromatic dicarboxylic acid, the generation of foreign matter in the resin can be suppressed or avoided.

Description of Embodiments

The contents of the present invention will be described in detail below. Note that in the present specification, "from... to..." is used to mean that the given numerical values are included as the lower limit and the upper limit, respectively.
The method for producing an amorphous polyamide resin of the present invention is characterized in that a diamine component and a dicarboxylic acid component to melt polycondensation reaction in the presence of a phosphorus atom-containing compound, the diamine component including 70 mol% or more of isophoronediamine, and the dicarboxylic acid component including an $\alpha,\omega$-linear aliphatic dicarboxylic acid having from 8 to 14 carbons and an aromatic dicarboxylic acid; and a maximum attainable temperature (Tp) reached in the melt polycondensation reaction is higher than a melting point (Tm) of the phosphorus atom-containing compound, and lower than a thermal decomposition temperature (Td) of the phosphorus-atom containing compound (Tm<Tp<Td). According to the present production method, foreign matter generated in the obtained amorphous polyamide resin can be suppressed or prevented.

The amorphous polyamide resin in the present invention is a polyamide resin that does not have a definite melting point, and specifically, is a polyamide resin having a crystal melting enthalpy ΔHm of less than 5 J/g, and ΔHm is preferably 3 J/g or less, and more preferably 1 J/g or less. The crystal melting enthalpy ΔHm is measured in accordance with a method described in the examples below.

<Amorphous Polyamide Resin>

The amorphous polyamide resin produced by the production method of the present invention is such that at least 70 mol% of the constituent unit derived from a diamine is a constituent unit derived from isophoronediamine, and preferably at least 80 mol%, more preferably at least 90 mol%, even more preferably at least 95 mol%, and yet even more preferably at least 99 mol% of the constituent unit derived from a diamine is a constituent unit derived from isophoronediamine. By adding isophoronediamine at a ratio greater than or equal to the lower limit described above, a higher transparency can be imparted to the molded article with less haze, which is preferable.

In the amorphous polyamide resin obtained by the production method according to the present invention, preferably, the constituent unit derived from a dicarboxylic acid includes a constituent unit derived from an $\alpha,\omega$-linear aliphatic dicarboxylic acid having from 8 to 14 carbons and a constituent unit derived from an aromatic dicarboxylic acid, and of the constituent unit derived from a dicarboxylic acid, from 30 to 80 mol% is a constituent unit derived from an $\alpha,\omega$-linear aliphatic dicarboxylic acid having from 8 to 14 carbons, and from 70 to 20 mol% is a constituent unit derived from an aromatic dicarboxylic acid (provided that the total does not exceed 100 mol%).

Preferably from 30 to 80 mol%, more preferably from 45 to 80 mol%, further preferably from 50 to 80 mol%, even more preferably from 60 to 80 mol%, and yet even more preferably 65 to 80 mol% of the constituent unit derived from a dicarboxylic acid is a constituent unit derived from an $\alpha,\omega$-linear aliphatic dicarboxylic acid having from 8 to 14 carbons.

In the present invention, from the viewpoint of increasing the solubility of the phosphorus atom-containing compound, it is preferable that the number of carbons of the constituent unit derived from the linear aliphatic dicarboxylic acid forms an appropriate length. From this perspective, the number of carbons of the $\alpha,\omega$-linear aliphatic dicarboxylic acid is more preferably from 10 to 12.

Furthermore, preferably from 70 to 20 mol%, more preferably from 55 to 20 mol%, further preferably from 50 to 20 mol%, even more preferably from 40 to 20 mol%, and yet even more preferably from 35 to 20 mol% of the constituent unit derived from a dicarboxylic acid is a constituent unit derived from an aromatic dicarboxylic acid.

In the amorphous polyamide resin, for each of the $\alpha,\omega$-linear aliphatic dicarboxylic acid having from 8 to 14 carbons and the aromatic dicarboxylic acid, one type, or two or more types may each be used. When two or more types are used, the total amount is preferably within the range described above.

In the present invention, the total amount of the constituent unit derived from an $\alpha,\omega$-linear aliphatic dicarboxylic acid having from 8 to 14 carbons and the constituent unit derived from an aromatic dicarboxylic acid accounts for preferably at least 90 mol%, more preferably at least 95 mol%, and even more preferably at least 99 mol% of the constituent unit derived from dicarboxylic acid.

The $\alpha,\omega$-linear aliphatic dicarboxylic acid having 8 to 14 carbons is preferably an $\alpha,\omega$-linear aliphatic dicarboxylic acid having from 8 to 12 carbons. Examples of the $\alpha,\omega$-linear aliphatic dicarboxylic acid having from 8 to 14 carbons include suberic acid, azelaic acid, sebacic acid, 1,9-nonanedicarboxylic acid, and dodecanedioic acid, and at least one of sebacic acid and dodecanedioic acid is preferable.

Examples of the aromatic dicarboxylic acid include isophthalic acid, 1,3-naphthalenedicarboxylic acid, 1,4-naphthalenedicarboxylic acid, 1,8-naphthalenedicarboxylic acid, and 2,6-naphthalenedicarboxylic acid. At least one type of isophthalic acid, 1,3-naphthalenedicarboxylic acid, 1,4-naphthalenedicarboxylic acid, 1,8-naphthalenedicarboxylic acid, or 2,6-naphthalenedicarboxylic acid is preferable, and at least one of 2,6-naphthalenedicarboxylic acid or isophthalic acid is more preferable. An example of a preferable embodiment of the amorphous polyamide resin is a form substantially free of constituent units derived from terephthalic acid. "Substantially free" means that the proportion of the constituent unit derived from terephthalic acid is 5 mol% or less, preferably 3 mol% or less, and more preferably 1 mol% or less, of the constituent unit derived from a dicarboxylic acid constituting the amorphous polyamide resin.

Examples of dicarboxylic acids (other dicarboxylic acids) besides the $\alpha,\omega$-linear aliphatic dicarboxylic acid having from 8 to 14 carbons and the aromatic dicarboxylic acid, include $\alpha,\omega$-linear aliphatic dicarboxylic acids having less than 8 carbons (e.g., adipic acid and pimelic acid), and alicyclic dicarboxylic acids (e.g., 1,3-cyclohexanedicarboxylic acid). One or more types of the other dicarboxylic acids may be used.

In the amorphous polyamide resin, of the constituent unit derived from dicarboxylic acid, the molar ratio of the constituent unit derived from an α,ω-linear aliphatic dicarboxylic acid having from 8 to 14 carbons to the constituent unit derived from an aromatic dicarboxylic acid ((constituent unit derived from an α,ω-linear aliphatic dicarboxylic acid having from 8 to 14 carbons)/(constituent unit derived from an aromatic dicarboxylic acid)) is preferably from 0.5 to 3.5, more preferably from 0.8 to 3.2, and even more preferably from 2.0 to 3.1. Within such a range, an amorphous polyamide resin better excelling in various performance aspects can be obtained.

Embodiments of preferred amorphous polyamide resins of the present invention are described below. Of course, the present invention is not limited to these embodiments.

A first embodiment of the amorphous polyamide resin is an amorphous polyamide resin in which not less than 90 mol% of the constituent unit derived from a diamine is a constituent unit derived from isophoronediamine; of the constituent unit derived from a dicarboxylic acid, from 30 to 80 mol% is a constituent unit derived from an α,ω-linear aliphatic dicarboxylic acid having from 8 to 14 carbons and from 70 to 20 mol% is a constituent unit derived from an aromatic dicarboxylic acid; the constituent unit derived from an α,ω-linear aliphatic dicarboxylic acid having from 8 to 14 carbons includes at least one of a constituent unit derived from sebacic acid and a constituent unit derived from dodecanedioic acid; and the constituent unit derived from an aromatic dicarboxylic acid includes at least one of a constituent unit derived from 2,6-naphthalenedicarboxylic acid and a constituent unit derived from isophthalic acid. The first embodiment includes an aspect in which the constituent unit derived from an α,ω-linear aliphatic dicarboxylic acid having from 8 to 14 carbons includes the constituent unit derived from sebacic acid or the constituent unit derived from dodecanedioic acid, and an aspect in which the constituent unit derived from an α,ω-linear aliphatic dicarboxylic acid having from 8 to 14 carbons includes both the constituent unit derived from sebacic acid and the constituent unit derived from dodecanedioic acid. Furthermore, the first embodiment includes an aspect containing a constituent unit derived from 2,6-naphthalenedicarboxylic acid or a constituent unit derived from isophthalic acid, and an aspect containing both of these constituent units.

A second embodiment of the amorphous polyamide resin is an aspect in which, of the constituent unit derived from a dicarboxylic acid of the first embodiment, from 30 to 80 mol% is a constituent unit derived from dodecanedioic acid and from 70 to 20 mol% is a constituent unit derived from an aromatic dicarboxylic acid. In the second embodiment, the molar ratio of (the constituent unit derived from dodecanedioic acid)/(the constituent unit derived from an aromatic dicarboxylic acid) is preferably from 2.3 to 4.0, and more preferably from 2.8 to 3.2. from 2.8 to 3.2. is preferable.

A third embodiment of the amorphous polyamide resin is an aspect in which of the constituent unit derived from a dicarboxylic acid of the first embodiment, from 30 to 80 mol% is a constituent unit derived from sebacic acid and from 70 to 20 mol% is a constituent unit derived from an aromatic dicarboxylic acid. In the third embodiment, the molar ratio of (the constituent unit derived from sebacic acid)/(the constituent unit derived from an aromatic dicarboxylic acid) is preferably from 2.3 to 4.0, and more preferably from 2.8 to 3.2.

A fourth embodiment of the amorphous polyamide resin is an aspect in which, of the constituent unit derived from a dicarboxylic acid of the first embodiment, from 30 to 80 mol% is a constituent unit derived from an α,ω-linear aliphatic dicarboxylic acid having from 8 to 14 carbons and from 70 to 20 mol% is a constituent unit derived from 2,6-naphthalene dicarboxylic acid. In the fourth embodiment, the molar ratio of (the constituent unit derived from an α,ω-linear aliphatic dicarboxylic acid having from 8 to 14 carbons)/(the constituent unit derived from 2,6-naphthalene) is preferably from 2.3 to 4.0, and more preferably from 2.8 to 3.2.

A fifth embodiment of the amorphous polyamide resin is an aspect in which, of the constituent unit derived from a dicarboxylic acid of the first embodiment, from 30 to 80 mol% is a constituent unit derived from an α,ω-linear aliphatic dicarboxylic acid having from 8 to 14 carbons and from 70 to 20 mol% is a constituent unit derived from isophthalic acid. In the fifth embodiment, the molar ratio of (the constituent unit derived from an α,ω-linear aliphatic dicarboxylic acid having from 8 to 14 carbons)/(the constituent unit derived from isophthalic acid) is preferably from 2.3 to 4.0, and more preferably from 2.8 to 3.2.

Note that the amorphous polyamide resin is constituted from the constituent unit derived from a dicarboxylic acid and the constituent unit derived from a diamine, but may also include a constituent unit besides the constituent unit derived from a dicarboxylic acid and the constituent unit derived from a diamine, or other moieties such as terminal groups. Examples of other constituent units include, but are not limited to, constituent units derived from lactams such as ε-caprolactam, valerolactam, laurolactam, and undecalactam; and from aminocarboxylic acids such as 11-aminoundecanoic acid and 12-aminododecanoic acid. Furthermore, the amorphous polyamide resin may include trace components such as additives used for synthesis.

Of the amorphous polyamide resin used in the present invention, the constituent unit derived from a dicarboxylic acid and the constituent unit derived from a diamine account for typically 95 mass% or more, preferably 98 mass% or more, and more preferably 99 mass%.

<Phosphorus Atom-Containing Compound>

In the production method of the present invention, the diamine component, the dicarboxylic acid component, and the phosphorus atom-containing compound are co-present in a system in which melt polycondensation reaction is implemented. In this way, amidation can be promoted by the presence of the phosphorus atom-containing compound in the system in which a polymerization reaction is implemented. In addition, coloration of the polyamide by oxygen present in the polycondensation reaction system can also be prevented.

In the present invention, when the melting point (Tm) of the phosphorus atom-containing compound is lower than the maximum attainable temperature (Tp) reached in melt polycondensation reaction (Tp > Tm), the phosphorus atom-containing compound reaches its melting point in the reaction process and melts. As a result, the phosphorus atom-containing compound tends to uniformly disperse in the system, the activity of the phosphorus atom-containing compound does not decrease, and an uneven distribution of inorganic matter, which is likely to cause the penetration of foreign matter, does not easily occur. From this perspective, the maximum attainable temperature (Tp) during melt polycondensation reaction is preferably at least 10°C higher than the melting point (Tm) of the phosphorus atom-containing compound, and the Tp is more preferably at least 20°C higher than Tm, and even more preferably at least 40°C higher than Tm. The upper limit value is not particularly defined, but the difference between Tp and Tm can be up to 210°C or lower, and can be 200°C or lower.

The melting point (Tm) of the phosphorus atom-containing compound varies depending on the abovementioned conditions and the selected compound, but is preferably not higher than 260°C, more preferably not higher than 250°C, even more preferably not higher than 240°C, and still more preferably not higher than 220°C. The lower limit is preferably 30°C or higher, and more preferably 40°C or higher, and may be 50°C or higher. The melting point of the phosphorus atom-containing compound is measured by the method described in the Examples.

In the production method of the present invention, the thermal decomposition temperature (Td) of the phosphorus atom-containing compound is higher than the maximum attainable temperature (Tp) that is reached in the melt polycondensation reaction (Td > Tp). In the present invention, Td is preferably at least 10°C higher than Tp, and Td is more preferably at least 15°C higher than Tp. The upper limit value is not particularly defined, but a difference between Td and Tp of 50°C or less is practical. When a phosphorus atom-containing compound in which the decomposition temperature (Td) is higher than the maximum attainable temperature (Tp) reached in melt polycondensation reaction is used, the phosphorus atom-containing compound does not decompose in the system, and the effect thereof can be sufficiently exhibited.

The thermal decomposition temperature in the present invention is the temperature at which the mass loss (decomposition) rate is 10 mass% when measured under a nitrogen atmosphere using a simultaneous differential thermogravimetric analyzer. That is, in the present invention, the maximum attainable temperature reached in the melt polycondensation reaction is less than the temperature at which the mass loss (decomposition) rate of the phosphorus atom-containing compound is 10 mass%.

The fact that the decomposition temperature (Td) of the phosphorus atom-containing compound is greater than the maximum attainable temperature (Tp) reached in the melt polycondensation (Td > Tp) makes it is possible to indirectly confirm the extent of decomposition of the phosphorus atom-containing compound at the maximum attainable temperature (Tp). In other words, in the measurements of the mass loss (decomposition) rate described in the examples, if the mass loss rate of the phosphorus atom-containing compound at the maximum attainable temperature (Tp) is less than 10 mass%, the phosphorus atom-containing compound can be evaluated as not decomposing at the maximum attainable temperature (Tp). That is, the matter of Tp < Td is indirectly supported.

The thermal decomposition temperature (Td) of the phosphorus atom-containing compound is preferably higher than 260°C, more preferably at least 270°C, and even more preferably at least 280°C. An upper limit of not greater than 500°C is practical.

The phosphorus atom-containing compound is preferably an alkali metal salt or an alkaline earth metal salt, is more preferably a sodium salt, a potassium salt, a calcium salt, or a magnesium salt, and is further preferably a sodium salt, a calcium salt, or a magnesium salt.

The alkaline earth metal salt in the present invention includes beryllium and magnesium in addition to calcium, strontium, barium, and radium. Calcium or magnesium is preferable.

Examples of the phosphorus atom-containing compound also include hypophosphites, phosphites, phosphates, and pyrophosphates. Hypophosphites, phosphites, and phosphates are preferable, and hypophosphites and phosphites are more preferable.

That is, the phosphorus atom-containing compound is preferably selected from an alkali metal salt of hypophosphorous acid, an alkaline earth metal salt of hypophosphorous acid, an alkali metal salt of phosphorous acid, an alkaline earth metal salt of phosphorous acid, an alkali metal salt of phosphoric acid, an alkaline earth metal salt of phosphoric acid, an alkali metal salt of pyrophosphoric acid, an alkaline earth metal salt of pyrophosphoric acid, an alkali metal salt of metaphosphoric acid, and an alkaline earth metal salt of metaphosphoric acid; and is more preferably selected from an alkali metal salt of hypophosphorous acid, an alkaline earth metal salt of hypophosphorous acid, an alkali metal salt of phosphorous acid, an alkaline earth metal salt of phosphorous acid, an alkali metal salt of phosphoric acid, an alkaline earth metal salt of phosphoric acid, an alkali metal salt of metaphosphoric acid, and an alkaline earth metal salt of metaphosphoric acid.

In the present invention, in particular, the phosphorus atom-containing compound is preferably at least one of an alkali metal salt of hypophosphorous acid or phosphorous acid, and an alkaline earth metal salt of hypophosphorous acid or phosphorous acid, is more preferably an alkali metal salt of hypophosphorous acid or an alkaline earth metal salt of phosphorous acid, and is even more preferably sodium hypophosphite or calcium phosphite.

Specific examples of alkali metal salts of hypophosphorous acid include sodium hypophosphite and potassium hypophosphite. Specific examples of alkaline earth metal salts of hypophosphorous acid include calcium hypophosphite and magnesium hypophosphite. Specific examples of alkali metal salts of phosphorous acid include sodium phosphite, sodium hydrogen phosphite, potassium phosphite, potassium hydrogen phosphite, lithium phosphite, and lithium hydrogen phosphite. Specific examples of alkaline earth metal salts of phosphorous acid include magnesium phosphite, magnesium hydrogen phosphite, calcium phosphite, and calcium hydrogen phosphite. Specific examples of alkali metal salts of phosphoric acid include sodium phosphate, disodium hydrogen phosphate, sodium dihydrogen phosphate, potassium phosphate, dipotassium hydrogen phosphate, potassium dihydrogen phosphate, lithium phosphate, lithium hydrogen phosphate, and lithium dihydrogen phosphate. Specific examples of the alkaline earth metal salt of phosphoric acid include magnesium phosphate, dimagnesium hydrogen phosphate, magnesium dihydrogen phosphate, calcium phosphate, dicalcium hydrogen phosphate, and calcium dihydrogen phosphate. Specific examples of alkali metal salts of pyrophosphoric acid include sodium pyrophosphate, potassium pyrophosphate, and lithium pyrophosphate. Specific examples of the alkaline earth metal salts of pyrophosphoric acid include magnesium pyrophosphate and calcium pyrophosphate. Specific examples of alkali metal salts of metaphosphoric acid include sodium metaphosphate, potassium metaphosphate, and lithium metaphosphate. Specific examples of alkaline earth metal salts of metaphosphoric acid include magnesium metaphosphate and calcium metaphosphate.

The maximum attainable temperature (Tp) reached in melt polycondensation reaction of the diamine and the dicarboxylic acid varies depending on the type of reaction substrate that is used, the reaction device, and the reaction conditions, but from the perspectives of reaction yield and reaction rate, the maximum attainable temperature (Tp) is preferably 200°C or higher, more preferably 240°C or higher, and even more preferably 260°C or higher. The upper limit may be, for example, not higher than 300°C, and may be not higher than 280°C. The method for measuring the maximum attainable temperature (Tp) reached in the melt polycondensation reaction may be determined in accordance with details that are common for this type of reaction, such as the structure of the device and the characteristics of the temperature measuring instrument. An example when carrying out the reaction in a batch-type reaction vessel is an aspect in which the tip of a thermocouple or thermometer is sufficiently immersed in the molten dicarboxylic acid component and is positioned so as to be sufficiently separated from a wall surface of the reaction vessel. Through this, the temperature of the molten raw material at which the reaction proceeds can be accurately determined.

The maximum attainable temperature (Tp) reached in the melt polycondensation reaction is determined, for example, by inserting a thermocouple through a thermocouple-insertion opening provided in an upper side of the reaction vessel, and positioning the tip end of the thermocouple at a height of approximately 10 mm from the bottom of the reaction vessel. The opening is preferably sealed by a heat-resistant plug or the like so that a sealed state is maintained. A thermocouple that can support measurements of temperatures from 0°C to 400°C is preferably selected.

The measurement is performed over time after the reaction is initiated by heating a phosphorus atom-containing compound (and as necessary, also a reaction rate modifier or the like) and a dicarboxylic acid to form a molten state, and then adding a diamine component thereto. In this measurement, the temperature when the maximum temperature is indicated is used as the maximum attainable temperature (Tp). However, the temperature is read premised on the condition that the temperature was maintained for 3 continuous seconds.

The addition amount of the phosphorus atom-containing compound added to the polycondensation reaction system of the polyamide resin is an amount such that the phosphorus atom concentration (by mass) in the polyamide resin is preferably at least 1 ppm, more preferably at least 15 ppm, and even more preferably at least 20 ppm. Furthermore, the upper limit of the addition amount of the phosphorus atom-containing compound is an amount such that the phosphorus atom concentration (by mass) in the polyamide resin is preferably 1000 ppm or less, more preferably 400 ppm or less, even more preferably 350 ppm or less, and yet even more preferably 300 ppm or less.

If the phosphorus atom concentration in the polyamide resin is greater than or equal to the lower limit described above, an effect as an antioxidant can be sufficiently obtained, and coloration of the polyamide resin can be prevented. On the other hand, if the phosphorus atom concentration in the polyamide resin is less than or equal to the upper limit described above, the occurrence of foreign matter thought to be caused by the phosphorus atom-containing compound can be suppressed, and a molded article with excellent appearance can be obtained.

<Polymerization Rate Modifier>

In the production method of the present invention, from the perspective of preventing gelling of the polyamide resin, preferably, a polymerization rate modifier is further added, and melt polycondensation reaction is performed in the presence of the phosphorus atom-containing compound and the polymerization rate modifier. That is, the method for producing an amorphous polyamide resin of the present invention preferably further includes carrying out melt polycondensation reaction in the presence of a polymerization rate modifier.

The polymerization rate modifier is preferably added before starting the reaction of the raw material monomers, and is more preferably added to the molten dicarboxylic acid component.

Examples of the polymerization rate modifier include at least one type selected from the group consisting of alkali metal hydroxides, alkaline earth metal hydroxides, alkali metal acetates, and alkaline earth metal acetates. Alkali metal hydroxides and alkali metal acetates are preferable.

Specific examples of the alkali metal hydroxides include lithium hydroxide, sodium hydroxide, potassium hydroxide, rubidium hydroxide, and cesium hydroxide. Specific examples of the alkaline earth metal hydroxides include magnesium hydroxide, calcium hydroxide, strontium hydroxide, and barium hydroxide. Specific examples of the alkali metal acetates include lithium acetate, sodium acetate, potassium acetate, rubidium acetate, and cesium acetate. Specific examples of the alkaline earth metal acetates include magnesium acetate, calcium acetate, strontium acetate, and barium acetate.

Among these, the polymerization rate modifier is preferably at least one selected from the group consisting of sodium hydroxide, potassium hydroxide, magnesium hydroxide, calcium hydroxide, sodium acetate, and potassium acetate, is more preferably at least one selected from the group consisting of sodium hydroxide, sodium acetate, and potassium acetate, and is even more preferably sodium acetate.

When the polymerization rate modifier is added to the polycondensation reaction system, the molar ratio of the phosphorus atoms of the phosphorus atom-containing compound to the polymerization rate modifier ((phosphorus atom-containing compound)/(polymerization rate modifier)) is preferably not less than 0.10, more preferably not less than 0.30, and even more preferably not less than 0.40 from the perspective of achieving a balance between promoting and suppressing an amidation reaction. The molar ratio thereof is preferably 0.95 or less, more preferably 0.93 or less, and even more preferably 0.91 or less, and may be 0.90 or less.

The polymerization rate modifier may be added to the polycondensation reaction system separately from the phosphorus atom-containing compound, or may be added to the polycondensation reaction system as an aqueous solution of the polymerization rate modifier.

<Molecular Weight Modifier>

A small amount of a monofunctional compound that is reactive with the terminal amino group or terminal carboxyl group of the polyamide resin may be added as a molecular weight modifier. Examples of monofunctional compounds include, but are not limited to, aliphatic monocarboxylic acids such as acetic acid, propionic acid, butyric acid, valeric acid, caproic acid, caprylic acid, lauric acid, tridecylic acid, myristic acid, palmitic acid, stearic acid, and pivalic acid; aromatic monocarboxylic acids such as benzoic acid, toluic acid, and naphthalene carboxylic acid; aliphatic monoamines such as butylamine, amylamine, isoamylamine, hexylamine, heptylamine, and octylamine; aromatic aliphatic monoamines such as benzylamine and methylbenzylamine; or mixtures thereof.

When a molecular weight modifier is used in the polycondensation reaction system, the suitable usage amount thereof varies depending on factors such as the reaction conditions and the reactivity and boiling point of the molecular weight modifier, but ordinarily, the usage amount is approximately 0.002 mass% with respect to the total of the diamine component and the dicarboxylic acid component of the raw materials.

<Polyamide Resin Polycondensation Reaction Method>

Examples of the method for polycondensing the polyamide resin include a reaction extrusion method, a pressurized salt method, a normal pressure dripping method, and a pressurized dripping method. However, in the present invention, the normal pressure dripping method or pressurized dripping method in which a diamine component is continuously added dropwise to a molten dicarboxylic acid component in a reaction chamber, and the mixture is subjected to polycondensation reaction is preferably adopted, and adoption of the pressurized dripping method is particularly preferable.

In the normal pressure dripping method, the diamine component is continuously added dropwise to the molten dicarboxylic acid component in a reaction chamber under normal pressure, and polycondensation reaction is performed while removing the condensed water. Note that the polycondensation reaction is preferably performed while increasing the temperature of the reaction system so that the polycondensation reaction of the produced polyamide resin is accelerated and the upper torque limit of the polymerization vessel that is used is not exceeded.

The phosphorus atom-containing compound may be contained in the dicarboxylic acid component, or may be contained in the diamine component, or may be contained in the system, separately from the dicarboxylic acid component and the diamine component. In the present invention, the phosphorus atom-containing compound is preferably contained in the dicarboxylic acid component.

With the pressurized dripping method, the diamine component is continuously added dropwise to the molten dicarboxylic acid component while pressurizing the inside of the reaction chamber to approximately from 0.4 to 0.5 MPa (Abs), and polycondensation reaction is performed while removing the condensed water. At this time, the polycondensation reaction is preferably performed while increasing the temperature of the reaction system so that the polycondensation reaction of the produced polyamide resin is accelerated and the upper torque limit of the polymerization vessel that is used is not exceeded. When the molar ratio setting is reached, the dropwise addition of the diamine component is ended, and while the inside of the reaction chamber is gradually returned to normal pressure, polycondensation reaction of the polyamide resin is promoted, and the inside of the reaction chamber is maintained at a temperature such that the upper torque limit of the polymerization vessel that is used is not exceeded, after which the temperature thereof is maintained while gradually depressurizing the inside of the reaction chamber to 0.08 MPa (Abs), and polycondensation reaction is continued. Once the stirring torque reaches a certain level, the inside of the reaction chamber is pressurized to approximately 0.3 MPa (Abs) with nitrogen, and the polyamide resin is recovered.

The addition time of the diamine component is not particularly limited, but if the addition rate is too fast, the heating rate of the reaction system may be slowed due to insufficient heating capacity. While dependent also on factors such as the volume of the reaction device and the heating capacity of the heater, the addition time of the diamine component is preferably from 30 minutes to 5 hours, and more preferably from 30 minutes to 4 hours.

The condensed water that is produced as the reaction progresses is passed through a partial condenser and a total condenser (cooler) and distilled and removed from the reaction system. The diamine component that is distilled to outside of the reaction system as steam together with the condensed water, the dicarboxylic acid that is distilled away as steam, and the like are preferably separated from water vapor by the partial condenser and once again returned to the reaction chamber.

Furthermore, immediately after the addition of the diamine component is ended, preferably the temperature of the reaction mixture is kept constant, and stirring is continued for approximately 10 to 30 minutes.

Subsequently, the pressure is reduced to approximately from 40 to 90 kPa (Abs) at a rate of preferably from 0.005 to 0.03 MPa/minute, and stirring is continued for approximately from 5 to 40 minutes, and thereby a polyamide resin can be obtained.

Once the obtained polyamide resin is removed, it can be pelletized, dried, and then used. Also, in order to further increase the degree of polymerization, the pelletized polyamide resin may be solid phase polymerized.

<Physical Properties of the Amorphous Polyamide Resin>

The lower limit of a number average molecular weight of the amorphous polyamide resin is preferably 8000 or higher, and more preferably 10000 or higher. The upper limit of the number average molecular weight is preferably 25000 or less, and more preferably 20000 or less. The number average molecular weight is measured in accordance with the method described in the examples below.

The molecular weight distribution ((weight average molecular weight)/(number average molecular weight) = Mw/Mn) of the amorphous polyamide resin of the present invention is preferably from 1.5 to 5.0, and more preferably from 1.5 to 3.5. By setting the molecular weight distribution to be within the range described above, fluidity and melt viscosity stability during melting increase, and melt-kneading and melt molding processability become favorable. Furthermore, toughness is favorable, and physical properties such as water absorption resistance, chemical resistance, and thermal aging resistance also become favorable.

The glass transition temperature (Tg) of the amorphous polyamide resin is preferably 130°C or higher, more preferably 140°C or higher, and even more preferably 145°C or higher. In the present invention, such a high Tg can be achieved, and thus an advantage of the present invention is that physical properties are hardly reduced even under high-temperature conditions. That is, the value of the amorphous polyamide resin obtained by the present invention is high in that the resin can be configured with a low melt viscosity while maintaining a high glass transition temperature. The upper limit of the glass transition temperature is not particularly limited and, for example, is preferably 220°C or lower or may be 200°C, and even a glass transition temperature of 170°C or lower is a sufficiently practical level. The glass transition temperature is measured in accordance with the method described in the examples described below.

The amorphous polyamide resin of the present invention has a notched Charpy impact strength in accordance with JIS K 7111-1 of preferably $4.0 \text{ kJ/m}^2$ or more, and more preferably $4.3 \text{ kJ/m}^2$ or more. The upper limit thereof is not particularly limited and, for example, an upper limit of $9.0 \text{ kJ/m}^2$ or less or even $8.7 \text{ kJ/m}^2$ or less is a sufficiently practical level. In the measurements, an ISO test piece of 4 mm $\times$ 10 mm $\times$ 80 mm is used, unless otherwise specified. An improvement in this impact strength is another merit according to the present invention.

Also, the amorphous polyamide resin of the present invention has a unnotched Charpy impact strength in accordance with JIS K 7111-1 of preferably 78 $kJ/m^2$ or more, more preferably 90 $kJ/m^2$ or more, even more preferably 100 $kJ/m^2$ or more, and yet even more preferably 110 $kJ/m^2$ or more. The upper limit thereof is not particularly defined, and for example, an upper limit of 160 $kJ/m^2$ or less or even 155 $kJ/m^2$ or less is a sufficiently practical level. In the measurements, an ISO test piece of 4 mm $\times$ 10 mm $\times$ 80 mm is used, unless otherwise specified. Another merit according to the present invention is an improvement in this impact strength.

The unnotched Charpy impact strength is measured by the method described in the examples below.

When the amorphous polyamide resin of the present invention is molded into a sheet with a thickness of 2 mm (for example, a test piece used in appearance evaluations of the examples described below), a measured haze value is preferably 2.0% or less, more preferably 1.7% or less, even more preferably 1.6% or less, and yet even more preferably 1.5% or less. The lower limit of the haze value is ideally 0%, but even a haze value of 1.0% or more is a sufficiently practical level.

The yellowness index (YI) value in a color difference test in accordance with JIS K7373 of the amorphous polyamide resin obtained through the method of the present invention is preferably not greater than 10, more preferably not greater than 6, and even more preferably not greater than 5. If the YI value of the polyamide resin is not greater than 10, yellowing of a molded article obtained through subsequent processing can be prevented, and thus a molded article with high product value can be obtained.

<Applications>

The amorphous polyamide resin obtained by the production method of the present invention can be blended with reinforcing fibers to thereby form a fiber-reinforced resin composition. Examples of reinforcing fibers include carbon fibers and glass fibers. Examples of the fiber-reinforced resin composition include pellets obtained by melt-kneading a composition including the polyamide resin and reinforcing fibers, and a prepreg in which the polyamide resin is impregnated into or brought into proximity with reinforcing fibers.

The amorphous polyamide resin obtained by the production method of the present invention may also be blended and used with other amorphous polyamide resins, crystalline polyamide resins, other thermoplastic resins, and additives, such as fillers, matting agents, heat-resistance stabilizers, weather-resistance stabilizers, ultraviolet absorbents, plasticizers, flame retardants, antistatic agents, anti-coloration agents, anti-gelling agents, impact-resistance modifiers, lubricants, colorants, and conductive additives. One or more types of each of these resins and additives may be used.

The amorphous polyamide resin according to the present invention can be molded by a known molding method such as injection molding, blow molding, extrusion molding, compression molding, stretching, and vacuum molding.

As examples of molded articles formed using the amorphous polyamide resin according to the present invention, the amorphous polyamide resin according to the present can be used in various molded articles including films, sheets, thin-walled molded articles, hollow molded articles, fibers, hoses, and tubes.

The amorphous polyamide resin according to the present invention is preferably used in engineering plastic applications. Examples of fields of use of such molded articles include transportation equipment components for automobiles, etc., general mechanical parts, precision mechanical parts, electronic and electrical equipment components, OA device parts, building materials and resident related components, medical devices, optical products, industrial materials, leisure sporting goods, amusement equipment, medical products, articles for daily use such as food packaging films, and defense and aerospace products. Examples of embodiments of molded articles according to the present invention include housings for electronic and electrical devices, and sunglasses.

Another example of an embodiment of a molded article formed using the amorphous resin composition according to the present invention is a single layer or multi-layer container.

Examples

The present invention will be described in greater detail below through examples. The following materials, usage amounts, proportions, processing details, processing procedures, and the like described in the examples may be changed, as appropriate, as long as there is no deviation from the spirit of the present invention. Therefore, the scope of the present invention is not limited to the specific examples described below.

<Phosphorus Atom-Containing Compound>

The compounds shown in Table 1 were used as phosphorus atom-containing compounds.

The melting point and mass loss (decomposition) rate of the phosphorus atom-containing compounds were measured using a simultaneous differential thermogravimetric analyzer by increasing the temperature from room temperature at a temperature increase rate of 10°C/minute in a nitrogen atmosphere.

The melting point was measured using a differential scanning calorimeter in a nitrogen atmosphere at a temperature increase rate of 10°C/minute from room temperature.

The mass loss (decomposition) rate was measured at 280°C. In addition, when the phosphorus atom-containing compound was a hydrate, the mass after the hydration water was decomposed by heating was set to 100 mass%, and the mass change at 280°C was measured.

As the simultaneous differential thermogravimetric analyzer, the DTG-60 available from Shimadzu Corporation was used.

In addition, the DSC-60 available from Shimadzu Corporation was used as the differential scanning calorimeter.

[Table 1]

| Type of Phosphorus Atom-Containing Compound | Melting Point (Tm) (°C) | Mass Loss (Decomposition) Rate (mass%) | Measurement Temperature (°C) for Mass Loss (Decomposition) Rate | Thermal Decomposition Temperature of Phosphorus Atom-Containing Compound |
|---|---|---|---|---|
| $NaH_2PO_2 \cdot H_2O$ | 78 | 7.7% | 280 | >280°C |
| $CaHPO_3 \cdot H_2O$ | 200 | 8.5% | 280 | >280°C |
| $Ca(H_2PO_2)_2$ | 320 | 2.4% | 280 | >280°C |
| $Mg(H_2PO_2)_2 \cdot 6H_2O$ | 340 | 2.1% | 280 | >280°C |

The above phosphorus atom-containing compounds all had a mass loss (decomposition) rate at 280°C of less than 10 mass%, and therefore it is clear that the thermal decomposition temperature of each of the phosphorus atom-containing compounds was higher than 280°C.

Example 1

<<Synthesis of IPD12I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9660 g (41.6 mol) of dodecanedioic acid (dodecane dicarboxylic acid: DDA, available from Laiyang Himount Bio-Products Technology Co., Ltd.),2305 g (13.86 mol) of isophthalic acid (PIA, available from Mitsubishi Gas Chemical Co., Inc.), 1.67 g (0.0016 mol) of sodium hypophosphite (available from Kanto Chemical Co., Inc.), and 1.16 g (0.0141 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9645 g (54.45 mol) of isophorone diamine (IPDA, available from BASF SE) stored in the dropping funnel into the raw materials in the reaction vessel was initiated. The temperature in a reaction chamber was raised to 260°C while generated condensed water was removed from the system and while the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the obtained polyamide resin was 146°C, and the number average molecular weight was 12800.

The crystal melting enthalpy $\Delta Hm$ was 1 J/g or less.

Using a differential scanning calorimeter (DSC), the glass transition temperature was measured when heating was performed at a temperature increase rate of 10°C/min from room temperature to 250°C, then cooling was immediately performed to room temperature or lower, and then heating was performed again at the temperature increase rate of 10°C/min from room temperature to 250°C in a nitrogen stream. In the present example, the DSC-60 available from Shimadzu Corporation was used as the differential scanning calorimeter.

Furthermore, the crystal melting enthalpy ΔHm of the polyamide resin was measured during the temperature increase process in accordance with JIS K 7121 and JIS K 7122.

The number average molecular weight of the amorphous polyamide resin was determined as follows.

An amount of 0.3 g of the amorphous polyamide resin was inserted into a 4/1 mixed solvent of phenol/ethanol (volume ratio), the mixture was stirred at 25°C until completely dissolved, after which under agitation, the inner wall of a container was rinsed with 5 mL of methanol, and neutralization titration was performed with a 0.01 mol/L hydrochloric acid aqueous solution to determine the terminal amino group concentration [NH2]. Furthermore, 0.3 g of the polyamide resin was added to benzyl alcohol and stirred at 170°C in a nitrogen stream until completely dissolved. Next, the mixture was cooled to 80°C or lower in a nitrogen stream, after which the inner wall of the container was rinsed with 10 mL of methanol while stirring, and neutralization titration was performed with a 0.01 mol/L sodium hydroxide aqueous solution to determine the terminal carboxyl group concentration [COOH]. The number average molecular weight was determined from the measured terminal amino group concentration $[NH_2]$ (unit: $\mu$eq/g) and the measured terminal carboxyl group concentration [COOH] (unit: ($\mu$eq/g) by the following equation.

$$\text{Number average molecular weight (Mn)} = 2000000/([COOH] + [NH_2])$$

«Appearance Evaluation»

The obtained pellets were vacuum-dried at 120°C (dew point: -40°C) for 24 hours, and then molded with an injection molding machine (SE130DU-HP, available from Sumitomo Heavy Industries, Ltd.) to form ISO test pieces of 2 mm × 10 mm × 10 mm at a molding temperature of 100°C and a cylinder temperature of 280°C.

Each test piece described above was observed using an optical microscope (Digital Microscope VHX-1000, available from Keyence Corporation), and the number of pieces of foreign matter was measured. Three test pieces were measured in each case, and the average value was used. Foreign matter of a size of 50 to 200 $\mu$m was targeted.

 A: The foreign matter quantity was 0.
 B: The foreign matter quantity was from 1 to less than 30.
 C: The foreign matter quantity was 30 or higher.

<<Charpy Impact Strength>>

The obtained polyamide resin pellets were vacuum-dried at 120°C (dew point: -40°C) for 24 hours, and then 4 mm × 10 mm × 80 mm test pieces were prepared using an injection molding machine (SE130DU-HP, available from Sumitomo Heavy Industries, Ltd.) at a mold temperature of 100°C and a cylinder temperature of 280°C.

The unnotched Charpy impact strength of each of the obtained test pieces was measured in accordance with JIS K 7111-1. The units were shown in $kJ/m^2$.

The SE130DU-HP available from Sumitomo Heavy Industrial Co., Ltd. was used as the injection molding machine.

Example 2

<<Synthesis of IPD12I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9660 g (41.6 mol) of dodecanedioic acid (dodecane dicarboxylic acid: DDA, available from Laiyang Himount Bio-Products Technology Co., Ltd.), 2305 g (13.86 mol) of isophthalic acid (PIA, available from Mitsubishi Gas Chemical Co., Inc.), 3.34 g (0.0032 mol) of sodium hypophosphite (available from Kanto Chemical Co., Inc.), and 1.16 g (0.0141 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9645 g (54.45 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the obtained polyamide resin was 146°C, and the number average molecular weight was 13400.

The crystal melting enthalpy $\Delta Hm$ was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Example 3

<<Synthesis of IPD12I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (40.89 mol) of dodecanedioic acid (dodecane dicarboxylic acid: DDA, available from Laiyang Himount Bio-Products Technology Co., Ltd.), 2305 g (13.86 mol) of isophthalic acid (PIA, available from Mitsubishi Gas Chemical Co., Inc.), 2.13 g (0.0154 mol) of calcium phosphite hydrate (available from Wako Pure Chemical Industries, Ltd.), and 1.16 g (0.0141 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9645 g (54.45 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the obtained polyamide resin was 146°C, and the number average molecular weight was 12900.

The crystal melting enthalpy $\Delta Hm$ was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Example 4

<<Synthesis of IPD10I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (46.51 mol) of sebacic acid (1,8-octane dicarboxylic acid: SA (available from CASDA)), 2578 g (15.50 mol) of isophthalic acid (PIA, available from Mitsubishi Gas Chemical Co., Inc.), 1.75 g (0.0165 mol) of sodium hypophosphite (available from Kanto Chemical Co., Inc.), and 1.22 g (0.0149 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9475 g (55.53 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the formed polyamide resin was 161°C, and the number average molecular weight was 13700.

The crystal melting enthalpy $\Delta Hm$ was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Example 5

<<Synthesis of IPD10I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (46.51 mol) of sebacic acid (1,8-octane dicarboxylic acid: SA (available from CASDA)), 2578 g (15.50 mol) of isophthalic acid (PIA, available from Mitsubishi Gas Chemical Co., Inc.), 2.29 g (0.0165 mol) of calcium phosphite hydrate (available from Wako Pure Chemical Industries, Ltd.), and 1.22 g (0.0149 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9475 g (55.53 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the formed polyamide resin was 161°C, and the number average molecular weight was 13400.

The crystal melting enthalpy $\Delta Hm$ was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Example 6

<<Synthesis of IPD12N>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (40.89 mol) of dodecanedioic acid (dodecane dicarboxylic acid: DDA, available from Laiyang Himount Bio-Products Technology Co., Ltd.), 2947 g (13.63 mol) of 2,6-naphthalene dicarboxylic acid (2,6-NDCA, available from BP plc), 1.69 g (0.016 mol) of sodium hypophosphite hydrate (available from Kanto Chemical Co., Inc), and 1.18 g (0.0144 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9476 g (55.53 mol) of IPDA (available from BASF SE) stored in the dropping funnel, into the raw materials in the reaction vessel was initiated, and the temperature in a reaction chamber was raised to 240°C while condensed water that was produced was removed from the system and while the pressure in the vessel was maintained at 0.4 MPa. After the completion of dropwise addition of IPDA (available from BASF SE), the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.
The glass transition temperature of the formed polyamide resin was 150°C, and the number average molecular weight was 14300.
The crystal melting enthalpy ΔHm was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Example 7

<<Synthesis of IPD12N>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (40.89 mol) of dodecanedioic acid (dodecane dicarboxylic acid: DDA, available from Laiyang Himount Bio-Products Technology Co., Ltd.), 2947 g (13.63 mol) of 2,6-naphthalene dicarboxylic acid (2,6-NDCA, available from BP plc), 2.20 g (0.0160 mol) of calcium phosphite hydrate (available from Wako Pure Chemical Industries, Ltd), and 0.27 g (0.0154 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9476 g (55.53 mol) of IPDA (available from BASF SE) stored in the dropping funnel, into the raw materials in the reaction vessel was initiated, and the temperature in a reaction chamber was raised to 240°C while condensed water that was produced was removed from the system and while the pressure in the vessel was maintained at 0.4 MPa. After the completion of dropwise addition of IPDA (available from BASF SE), the pressure in the reaction vessel was gradually returned to normal pressure while the temperature was gradually raised to 270°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the formed polyamide resin was 150°C, and the number average molecular weight was 14500.

The crystal melting enthalpy ∆Hm was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Comparative Example 1

<<Synthesis of IPD12I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (40.89 mol) of dodecanedioic acid (dodecane dicarboxylic acid: DDA, available from Laiyang Himount Bio-Products Technology Co., Ltd.), 2266.8 g (13.63 mol) of isophthalic acid (PIA, available from Mitsubishi Gas Chemical Co., Inc.), 2.63 g (0.00154 mol) of calcium hypophosphite (available from Kanto Chemical Co., Inc.), and 1.14 g (0.0139 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9475 g (55.53 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.

The glass transition temperature of the obtained polyamide resin was 146°C, and the number average molecular weight was 12900.

The crystal melting enthalpy ∆Hm was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

Comparative Example 2

<<Synthesis of IPD12I>>

A pressure-resistant reaction vessel having an internal volume of 50 L and equipped with a stirrer, a partial condenser, a total condenser, a pressure regulator, a thermometer, a dropping funnel and pump, an aspirator, a nitrogen introduction tube, a bottom drain valve, and a strand die was charged with precisely weighed materials including 9500 g (40.89 mol) of dodecanedioic acid (dodecane dicarboxylic acid: DDA, available from Laiyang Himount Bio-Products Technology Co., Ltd.), 2266.8 g (13.63 mol) of isophthalic acid (PIA, available from Mitsubishi Gas Chemical Co., Inc.), 3.99 g (0.00154 mol) of magnesium hypophosphite hexahydrate (available from Junsei Chemical Co., Ltd.), and 1.14 g (0.0139 mol) of sodium acetate (available from Kanto Chemical Co., Inc.), and then sufficiently purged with nitrogen, after which the inside of the reaction vessel was sealed, and the temperature was raised to 180°C under stirring while the pressure in the vessel was maintained at 0.4 MPa. After the temperature reached 180°C, dropwise addition of 9475 g (55.53 mol) of isophoronediamine (IPDA, available from BASF SE) stored in a dropping funnel, into the raw materials in the reaction vessel was then initiated, and the temperature in the reaction chamber was raised to 240°C while condensed water that was produced was removed from the system and the pressure in the vessel was maintained at 0.4 MPa. After the completion of dropwise addition of IPDA, the pressure in the reaction vessel was gradually returned to normal pressure while the temperature was gradually raised to 260°C, and then an aspirator was used to reduce the pressure inside the reaction chamber to 80 kPa and remove the condensed water. Agitation torque of the stirrer was observed under a reduced pressure, and agitation was terminated when a predetermined torque was reached. Then, the inside of the reaction chamber was pressurized with nitrogen, the bottom drain valve was opened, and the polymer was extruded from the strand die to form a strand and then cooled and pelletized by using a pelletizer to obtain a polyamide resin.
The glass transition temperature of the obtained polyamide resin was 146°C, and the number average molecular weight was 11900.
The crystal melting enthalpy ΔHm was 1 J/g or less.

<<Appearance Evaluation>>

The appearance of the obtained amorphous polyamide resin was evaluated in the same manner as in Example 1.

<<Charpy Impact Strength>>

The Charpy impact strength of the obtained amorphous polyamide resin was evaluated in the same manner as in Example 1.

[Table 2]

| | Polyamide Type | α,ω- Linear Aliphatic Dicarboxylic Acid Component | Aromatic Dicarboxylic Acid Component | Diamine Component | Phosphorus Atom-Containing Compound | | | Appearance Evaluation | Charpy Impact Strength |
|---|---|---|---|---|---|---|---|---|---|
| | | | | | Type | Form when added | Added Amount[*1] | | kJ/m$^2$ |
| Example 1 | IPD12I | Dodecanedioic acid | Isophthalic acid | IPDA | $NaH_2PO_2 \cdot H_2O$ | solid powder | 50 ppm | A | 122 |
| Example 2 | IPD12I | | | | $NaH_2PO_2 \cdot H_2O$ | solid powder | 100 ppm | A | 120 |
| Example 3 | IPD12I | | | | $CaHPO_3 \cdot H_2O$ | solid powder | 50 ppm | A | 121 |
| Example 4 | IPD10I | Sebacic acid | Isophthalic acid | | $NaH_2PO_2 \cdot H_2O$ | solid powder | 50 ppm | A | 84 |
| Example 5 | IPD10I | | | | $CaHPO_3 \cdot H_2O$ | solid powder | 50 ppm | A | 80 |
| Example 6 | IPD12N | Dodecanedioic acid | Naphthalene dicarboxylic acid | | $NaH_2PO_2 \cdot H_2O$ | solid powder | 50 ppm | A | 145 |
| Example 7 | IPD12N | | | | $CaHPO_3 \cdot H_2O$ | solid powder | 50 ppm | A | 144 |
| Comparative Example 1 | IPD12I | Dodecanedioic acid | Isophthalic acid | | $Ca(H_2PO_2)_2$ | solid powder | 50 ppm | C | 84 |
| Comparative Example 2 | IPD12I | | | | $Mg(H_2PO_2)_2 \cdot 6H_2O$ | solid powder | 50 ppm | C | 73 |
| *1: In terms of phosphorus atom concentration (based on mass) in the polyamide resin | | | | | | | | | |

18

As is clear from the above results, it was found that when producing an amorphous polyamide resin having a constituent unit derived from isophoronediamine, a constituent unit derived from an α,ω-linear aliphatic dicarboxylic acid having from 8 to 14 carbons, and a constituent unit derived from an aromatic dicarboxylic acid, the production of foreign matter in the resin can be suppressed or prevented, and a good appearance when formed into a molded article can be obtained by using a phosphorus atom-containing compound that has a melting point lower than the maximum attainable temperature reached in the melt polycondensation reaction and has a thermal decomposition temperature that is higher than the maximum attainable temperature thereof.

**Claims**

1. A method for producing an amorphous polyamide resin; comprising subjecting a diamine component and a dicarboxylic acid component to melt polycondensation reaction in presence of a phosphorus atom-containing compound, the diamine component including 70 mol% or more of isophoronediamine, and the dicarboxylic acid component including an α,ω-linear aliphatic dicarboxylic acid having from 8 to 14 carbons and an aromatic dicarboxylic acid, wherein a maximum attainable temperature reached in the melt polycondensation reaction is higher than a melting point of the phosphorus atom-containing compound, and lower than a thermal decomposition temperature of the phosphorus-atom containing compound.

2. The method for producing an amorphous polyamide resin according to claim 1, wherein the phosphorus atom-containing compound is at least one selected from an alkali metal salt of hypophosphorous acid, an alkaline earth metal salt of hypophosphorous acid, an alkali metal salt of phosphorous acid, an alkaline earth metal salt of phosphorous acid, an alkali metal salt of phosphoric acid, an alkaline earth metal salt of phosphoric acid, an alkali metal salt of pyrophosphoric acid, an alkaline earth metal salt of pyrophosphoric acid, an alkali metal salt of metaphosphoric acid, and an alkaline earth metal salt of metaphosphoric acid.

3. The method for producing an amorphous polyamide resin according to claim 1, wherein the phosphorus atom-containing compound is at least one of an alkali metal salt of hypophosphorous acid or phosphorous acid; and an alkaline earth metal salt of hypophosphorous acid or phosphorous acid.

4. The method for producing an amorphous polyamide resin according to any one of claims 1 to 3, further comprising performing the melt polycondensation reaction in presence of a polymerization rate modifier.

5. The method for producing an amorphous polyamide resin according to claim 4, wherein the polymerization rate modifier is at least one selected from the group consisting of an alkali metal hydroxide, an alkaline earth metal hydroxide, an alkali metal acetate, and an alkaline earth metal acetate.

6. The method for producing an amorphous polyamide resin according to any one of claims 1 to 5, wherein the thermal decomposition temperature of the phosphorus atom-containing compound is higher than 260°C.

7. The method for producing an amorphous polyamide resin according to any one of claims 1 to 6, wherein the melting point of the phosphorus atom-containing compound is from 30°C to 260°C.

8. The method for producing an amorphous polyamide resin according to any one of claims 1 to 7, wherein the amorphous polyamide resin comprises a constituent unit derived from a diamine and a constituent unit derived from a dicarboxylic acid, and of the constituent unit derived from a dicarboxylic acid, from 30 to 80 mol% is a constituent unit derived from an α,ω-linear aliphatic dicarboxylic acid having from 8 to 14 carbons, and from 70 to 20 mol% is a constituent unit derived from an aromatic dicarboxylic acid.

9. The method for producing an amorphous polyamide resin according to claim 8, wherein in the amorphous polyamide resin, the constituent unit derived from an α,ω-linear aliphatic dicarboxylic acid having from 8 to 14 carbons includes at least one of a constituent unit derived from sebacic acid and a constituent unit derived from dodecanedioic acid.

10. The method for producing an amorphous polyamide resin according to claim 8 or 9, wherein in the amorphous polyamide resin, the constituent unit derived from an aromatic dicarboxylic acid includes at least one of a constituent unit derived from 2,6-naphthalene dicarboxylic acid and a constituent unit derived from isophthalic acid.

11. The method for producing an amorphous polyamide resin according to any one of claims 1 to 7, wherein the amorphous polyamide resin comprises a constituent unit derived from a diamine and a constituent unit derived from a dicarboxylic acid,

at least 90 mol% of the constituent unit derived from a diamine is a constituent unit derived from isophoronediamine, of the constituent unit derived from a dicarboxylic acid, from 30 to 80 mol% is a constituent unit derived from an $\alpha,\omega$-linear aliphatic dicarboxylic acid having from 8 to 14 carbons, and from 70 to 20 mol% is a constituent unit derived from an aromatic dicarboxylic acid;

the constituent unit derived from an $\alpha,\omega$-linear aliphatic dicarboxylic acid having from 8 to 14 carbons includes at least one of a constituent unit derived from sebacic acid and a constituent unit derived from dodecanedioic acid, and the constituent unit derived from an aromatic dicarboxylic acid includes at least one of a constituent unit derived from 2,6-naphthalene dicarboxylic acid and a constituent unit derived from isophthalic acid.

**INTERNATIONAL SEARCH REPORT**

| | International application No. |
|---|---|
| | PCT/JP2019/031887 |

A. CLASSIFICATION OF SUBJECT MATTER
Int.Cl. C08G69/28(2006.01)i

According to International Patent Classification (IPC) or to both national classification and IPC

B. FIELDS SEARCHED

Minimum documentation searched (classification system followed by classification symbols)
Int.Cl. C08G69/28

Documentation searched other than minimum documentation to the extent that such documents are included in the fields searched
Published examined utility model applications of Japan    1922–1996
Published unexamined utility model applications of Japan    1971–2019
Registered utility model specifications of Japan    1996–2019
Published registered utility model applications of Japan    1994–2019

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 07-165911 A (MITSUI PETROCHEMICAL INDUSTRIES, LTD.) 27 June 1995, claim 1, paragraphs [0019], [0023], [0024], [0036]-[0041], [0044], [0057]-[0116] (Family: none) | 1–11 |
| A | JP 5071828 B2 (FUJI ELECTRIC CO., LTD.) 31 August 2012, paragraph [0062] & US 2011/0244381 A1, paragraph [0088] & KR 10-2011-0003561 A & CN 102047185 A | 1–11 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 30.09.2019 | Date of mailing of the international search report 08.10.2019 |
|---|---|
| Name and mailing address of the ISA/ Japan Patent Office 3-4-3, Kasumigaseki, Chiyoda-ku, Tokyo 100-8915, Japan | Authorized officer

Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016208272 A